(19) Europäisches Patentamt
European Patent Office
Office européen des brevets

(11) **EP 3 169 904 B1**

(12) **EUROPEAN PATENT SPECIFICATION**

(45) Date of publication and mention
of the grant of the patent:
**06.03.2019 Bulletin 2019/10**

(21) Application number: **15762712.6**

(22) Date of filing: **16.07.2015**

(51) Int Cl.:
*F04D 25/08* (2006.01)   *F04D 27/00* (2006.01)
*H02P 29/00* (2016.01)   *H02H 7/085* (2006.01)
*H02P 29/60* (2016.01)   *H02H 5/04* (2006.01)

(86) International application number:
**PCT/IB2015/055382**

(87) International publication number:
**WO 2016/009380 (21.01.2016 Gazette 2016/03)**

(54) **METHOD FOR CONTROLLING AN ELECTRIC VENTILATOR**

VERFAHREN ZUR STEUERUNG EINES ELEKTRISCHEN LÜFTERS

PROCÉDÉ PERMETTANT DE COMMANDER UN VENTILATEUR ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2014 IT BO20140408**

(43) Date of publication of application:
**24.05.2017 Bulletin 2017/21**

(73) Proprietor: **SPAL Automotive S.r.l.
42015 Correggio (IT)**

(72) Inventor: **DE FILIPPIS, Pietro
I-17019 Varazze (IT)**

(74) Representative: **Puggioli, Tommaso
Bugnion S.p.A.
Via di Corticella, 87
40128 Bologna (IT)**

(56) References cited:
**EP-A2- 1 073 174     EP-A2- 1 383 232
DE-A1- 19 945 824     US-A1- 2009 189 559
US-A1- 2010 150 736**

## Description

### Technical field

This invention relates to a method for controlling an electric ventilator and in particular a method for controlling the electric motor of an electric ventilator in automotive applications.

### Background art

Electric ventilators are widely used in the automotive sector with functions of cooling and removing heat from radiating masses.

The electric ventilators comprise, in short, an electric motor, a fan driven by the electric motor and electronics for controlling the motor.

A distinctive feature of the control electronics is also the possibility of protecting the electric motor and the electronics from any overheating or over-temperatures, determined, for example, by particularly severe operating conditions, such as a high ambient temperature or sudden drawbacks.

More specifically, the overheatings are delicate in electric ventilators comprising electric motors of the closed and/or sealed type with control electronics fitted inside, in which the heat dissipation is of even greater importance and must be significantly reduced.

In general, the electric ventilator and the control electronics are characterised by precise temperature ranges wherein the operation is optimum and safe and the nominal performance is guaranteed.

If there is a temperature increase in the motor above the permissible maximum values, even though it is operating at nominal values, it is necessary to intervene in order to protect the control electronics, especially the electronic components, against possible damage.

One control strategy comprises, for example the one described in document EP1073174, in the case of temperature increases beyond the permissible values, "degrading" the motor, that is to say, reducing the efficiency and power outputs compared with the nominal performance levels, which are no longer guaranteed, in order to preserve the control electronics.

The degrading is used, in practice, to lower the working temperature of the motor in order to counteract, for example, an increase in the outside temperature.

In general, the control electronics comprise, amongst the other electronic components, a microcontroller and a plurality of electronic power components, such as, for example, MOSFETs.

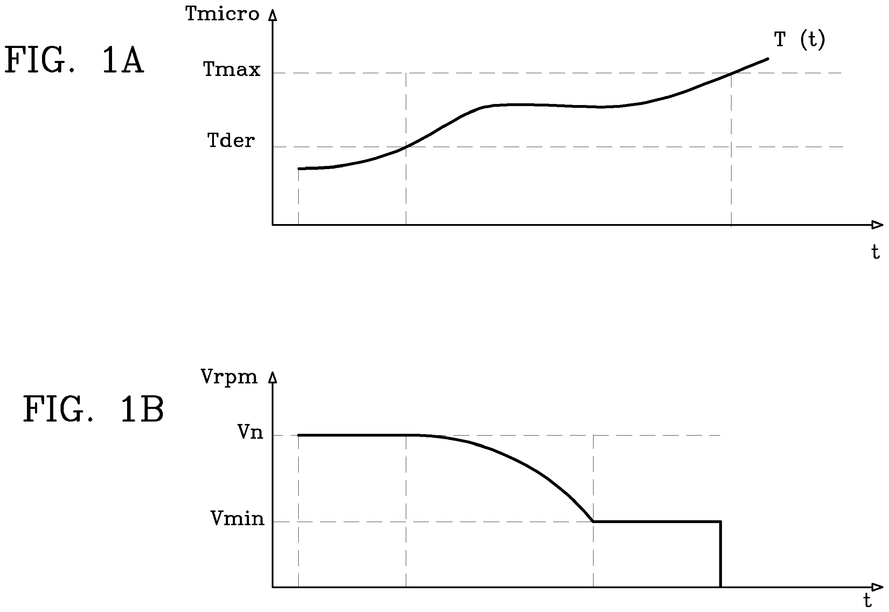

A known control method comprises monitoring the temperature of the microcontroller, or the card on which it is installed, and the power MOSFETs; if the temperature of the MOSFETs reaches a respective maximum threshold temperature, the motor is stopped. With reference to Figures 1A and 1B, relating to this known control method, considering the temperature of the microcontroller, starting from a working condition at the nominal speed $V_n$, if the temperature of the microcontroller $T_{micro}$ reaches a respective first threshold temperature $T_{der}$ a process is activated for degrading the performance of the electric ventilator with a corresponding reduction in the speed of the motor, for example with a proportional error at $\Delta T$, up to a value $V_{minutes}$ beyond which the electric ventilator continues to rotate at a extremely reduced constant speed compared with the nominal speed. If the temperature of the microcontroller continuous to rise, despite the degrading, to a second threshold temperature $T_{max}$, the motor is stopped and the speed is changed to 0. In practice, the degrading is controlled by a regulating device, for example PI, based on the temperature error; in the case, not illustrated, in which the temperature of the microcontroller drops again below $T_{der}$ before the motor stops, the speed is again increased to $V_n$.

The main drawback of this control and protection method is that, under certain conditions, the speed of rotation of the electric ventilator might be excessively reduced, placing at risk the entire vehicle on which the electric ventilator is installed, in cases in which the over-temperature is caused by a transient event which passes in a relatively short time. Another method for improving availability of a fan system is described in document EP1383232. The method involves driving the drive via a drive module that drives power switches connected to an electronic circuit board with a pulse width modulation signal by changing the instantaneous duty cycle to modified a maximum duty cycle on reaching a first threshold temperature and to a minimum value on reaching a higher threshold temperature.

In document DE19945824 a device which includes an over-temperature protection device with at least one temperature sensor is described. When threshold temperatures are reached, the current to the fan drive is reduced or switched off. The temperature thresholds are dynamically set based on the rate of change of the temperature measured by the sensor, and the larger the rate of change, the more the thresholds are reduced. The temperature thresholds may be determined empirically for each type of fan controller.

In document US2010150736 a method for a fan system operation is disclosed. A control module having means for evaluating a signal TNTC from a temperature sensor, and for setting the pulse duty factors of pulsed control voltages at a circuit breakers, takes into account this signal as well as a requested fan power, in such a way that no power loss exceeding a specified value occurs at any circuit breaker.

## Disclosure of the invention

In this context, the main aim of this invention is to overcome the above-mentioned drawback.

The aim of this invention is to propose a method for controlling an electric ventilator which increases the safety of the entire vehicle, avoiding a degrading or even a too sudden switching off of the electric ventilator.

The technical purpose indicated and the aims specified are substantially achieved by a control method according to claim 1.

## Brief description of drawings

Further features and advantages of this invention are more apparent in the detailed description below, with reference to a preferred, non-restricting, embodiment of a control method for an electric ventilator as schematically illustrated in the accompanying drawings, in which:

- Figure 1A illustrates an example of the temperature diagram of the microcontroller as a function of time in a control method of known type;
- Figure 1B illustrates a diagram of the rotation speed of the motor as a function of time correlated with the diagram of Figure 1A of the control method of known type;
- Figure 2 illustrates a block diagram of the control method according to this invention;
- Figures 3A to 3D illustrate, respectively, the diagrams, as a function of time, of the temperature of the microcontroller, the temperature of the MOSFETs, of a counter timeout and of the speed of rotation of the motor in the control method according to this invention.

## Detailed description of preferred embodiments of the invention

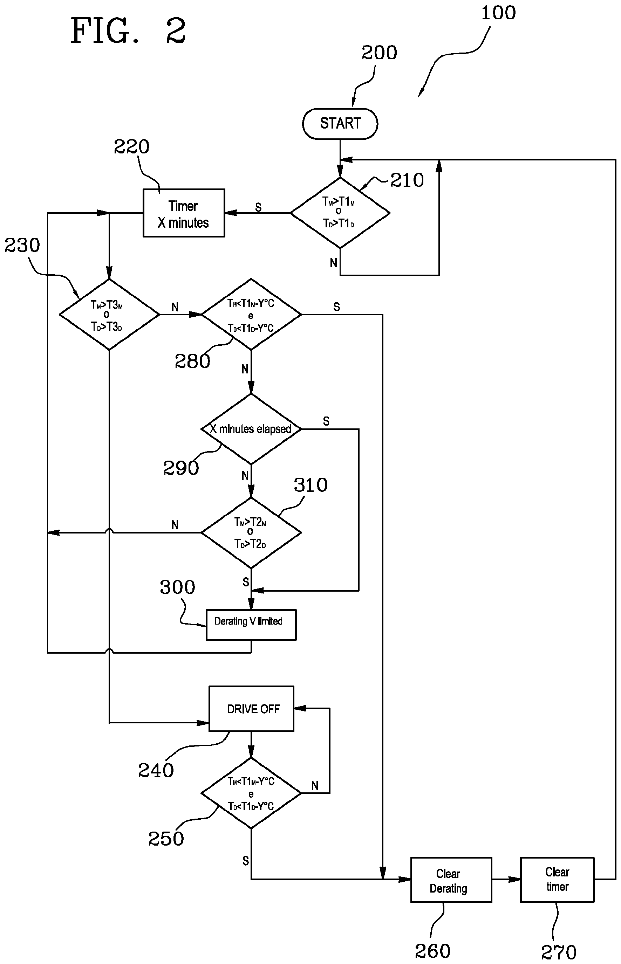

With reference to Figure 2, the numeral 100 denotes a block diagram relative to the method for controlling an electric ventilator of substantially known type and not illustrated.

The electric ventilator preferably controlled according to this method comprises, very briefly, an electric motor, a fan driven by the electric motor and a card for driving and controlling the electric motor.

The electronic card is preferably housed inside the motor which in turn is preferably of the sealed type.

The electronic card comprises a microcontroller or driver and electronic power means which comprise, for example and preferably, MOSFETs, to which explicit reference will be made, for controlling and powering the electric motor.

The electronic card imparts the speed V of rotation to the motor.

The microcontroller has a relative temperature $T_D$ and the MOSFETs have a relative temperature $T_M$.

The method, according to this invention, for controlling the electric ventilator comprises, after the motor is started, defining or setting a first value V1 of the speed V of rotation of the electric motor, in general corresponding to the nominal speed of the electric ventilator, that is, the speed at which the electric ventilator guarantees the nominal performance. The method comprises a step for defining or setting a maximum threshold temperature $T3_M$ of the electronic power means, more specifically of the MOSFETs.

The method comprises a step for defining or setting a maximum threshold temperature $T3_D$ of the microcontroller.

The method comprises a step for defining or setting a first threshold temperature $T1_D$ of the microcontroller which is lower than the maximum threshold temperature $T3_D$ of the microcontroller.

The method comprises a step for defining or setting a first threshold temperature $T1_M$ of the electronic power means, more specifically of the MOSFETs, which is lower than the maximum threshold temperature $T3_M$ of the MOSFETS.

The method comprises a step for defining or setting a second threshold temperature $T2_D$ of the microcontroller which is lower than the maximum threshold temperature $T3_D$ of the microcontroller and higher than the first temperature $T1_D$ of the microcontroller.

The method comprises a step for defining or setting a second threshold temperature $T2_M$ of the electronic power means, more specifically of the MOSFETs, which is lower than the maximum threshold temperature $T3_M$ of the MOSFETS and higher than the first threshold temperature $T1_M$ of the electronic power means.

In a preferred embodiment, the first threshold temperature $T1_D$ of the microcontroller is higher than or equal to 145°C and is lower than 150°C, that is to say:

$$145°C \leq T1_D < 150°C.$$

In a preferred embodiment, the second threshold temperature $T2_D$ of the microcontroller is higher than or equal to 150°C and is lower than 155°C, that is to say:

$$150°C \leq T2_D < 155°C.$$

In a preferred embodiment, the maximum threshold temperature $T3_D$ of the microcontroller is higher than or equal to 155°C and is lower than 160°C, that is to say:

$$155°C \leq T3_D < 160°C.$$

In a preferred embodiment, the first threshold temperature $T1_M$ of the electronic power means is higher than or equal to 150°C and is lower than 155°C, that is to say:

$$150°C \leq T1_M < 155°C.$$

In a preferred embodiment, the second threshold temperature $T2_M$ of the electronic power means is higher than or equal to 155°C and is lower than 160°C, that is to say:

$$155°C \leq T2_M < 160°C.$$

In a preferred embodiment, the maximum threshold temperature $T3_M$ of the electronic power means is higher than or equal to 155°C and is lower than 160°C, that is to say:

$$155°C \leq T3_M < 160°C.$$

The method comprises monitoring the temperature $T_D$ of the microcontroller and monitoring the temperature $T_M$ of the electronic power means, more specifically of the MOSFETs.

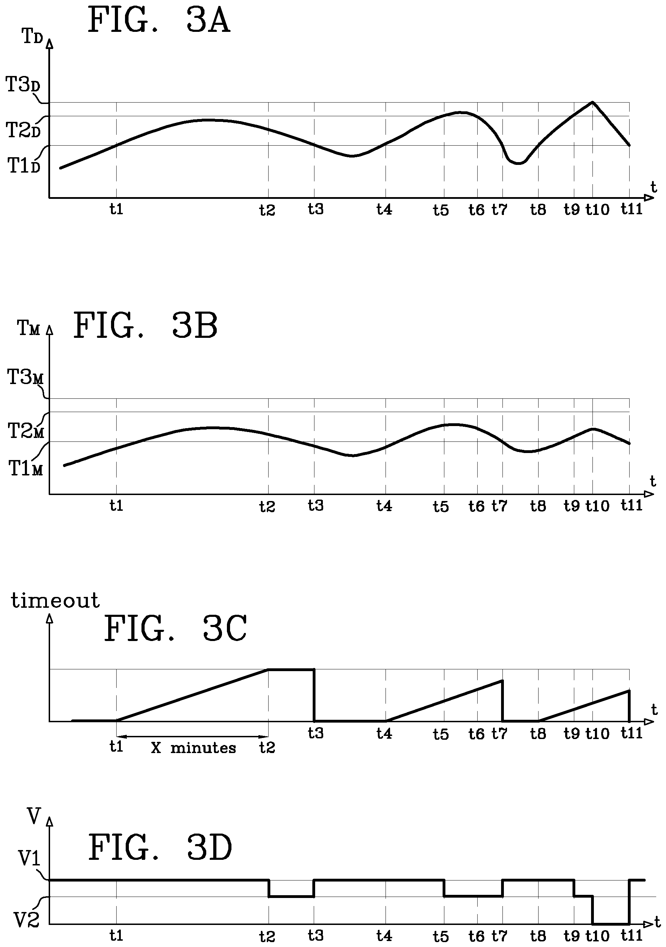

Figures 3A and 3B show, respectively, an example of the trend over time of the temperature of the microcontroller $T_D$ and an example of the trend over time of the temperature $T_M$ of the electronic power means, more specifically of the MOSFETs.

The diagrams of Figures 3A and 3B show in order also the respective above-mentioned thresholds of temperatures $T1_D$, $T2_D$, $T3_D$ and $T1_M$, $T2_M$, $T3_M$.

It should be noted that, in short and for practical purposes, reference is made to the temperatures of the microcontroller and of the MOSFETs; advantageously, it is also possible to implement this method considering the temperatures in substantial correspondence of the microcontroller or of the MOSFETs, or monitoring them indirectly, for example by monitoring the temperature of the electronic card corresponding with these components.

According to this invention, the control method comprises providing a counter of a predetermined time X; the counter, suitably controlled, as described in more detail below, counts the passage of time X.

The predetermined time X is preferably between 2 minutes and 5 minutes, that is to say:

$$2 \text{ minutes} \leq X \leq 5 \text{ minutes}$$

Preferably, the time X corresponds to 3 minutes, the period of time to which explicit reference is made hereinafter without thereby limiting the scope of the invention.

With reference in particular to Figure 2, once the nominal speed V1 of the motor has been set a control method or procedure, in particular for protecting the motor, is performed as follows.

The block 200 indicates the start of the process.

If the temperature of the microcontroller or of the MOSFETs exceeds the respective first threshold temperature $T1_D$ or $T1_M$ block 210 the counter is started block 220.

If the temperature of the microcontroller and of the MOSFETs remains below the respective first threshold temperature $T1_D$ or $T1_M$ block 210 the process remains closed on the block 210.

If the temperature of the microcontroller or the temperature of the MOSFETs exceeds the respective maximum threshold temperature $T3_D$ and $T3_M$ block 230 the motor is stopped block 240, that is, the speed of rotation V is degraded to 0.

Once the motor has been switched off block 250, the process checks if the temperature of the microcontroller and the temperature of the MOSFETs have both dropped below the respective first threshold temperatures $T1_D$, $T1_M$, preferably reduced by a constant Y which makes the control method more robust, preferably between 2 and 8 degrees Centigrade; reference is also made hereinafter, for simplicity, to the threshold temperatures without further indicating the hysteresis constants Y; in particular, the indication of the thermal hysteresis is omitted in Figures 3A-3D.

If the temperature $T_D$ the microcontroller and the temperature $T_M$ of the MOSFETs have both dropped below the respective first threshold temperature $T1_D$, $T1_M$, the motor is restarted block 260 and the counter is stopped and set to zero block 270.

If the temperature of the microcontroller and the temperature of the MOSFETs remain below the respective maximum threshold temperatures $T3_D$ and $T3_M$ block 230, the process checks if the temperature of the microcontroller and the temperature of the MOSFETs have both dropped below the respective first threshold temperatures $T1_D$, $T1_M$, preferably reduced by the constant Y block 280.

If the temperature of the microcontroller and the temperature of the MOSFETs have both dropped below the respective first threshold temperature $T1_D$, $T1_M$, the counter is stopped and set to zero block 270.

If the temperature of the microcontroller or the temperature of the MOSFETs is still above the respective first threshold temperature $T1_D$, $T1_M$ block 280, if the time X counted by the counter has passed block 290, the speed V of rotation of the motor is reduced to a second value V2 block 300.

Preferably, the second value V2 of the speed of rotation is set as the first speed value V1 reduced by a constant percentage D, preferably between 3 and 8, that is to say:

$$V2=V1-D\%$$

If the temperature of the microcontroller or the temperature of the MOSFETs is still above the respective first threshold temperature $T1_D$, $T1_M$, block 280 and the time X counted by the counter is still progress, the process comprises checking if the temperature $T_D$ of the microcontroller or the temperature $T_M$ of the MOSFETs has exceeded the respective second threshold temperatures $T2_D$ or $T2_M$ block 310.

If the temperature of the microcontroller or the temperature of the MOSFETs has exceeded the respective second threshold temperature $T2_D$ or $T2_M$, the speed V of rotation of the motor is reduced to the second value V2.

If the temperature of the microcontroller and the temperature of the MOSFETs has not exceeded the respective second threshold temperatures $T2_D$ or $T2_M$ block 310, the process continues, in practice, from block 230, checking that the temperature of the microcontroller and the temperature of the MOSFETs has not exceeded the respective maximum threshold temperature $T3_D$, $T3_M$.

With reference to Figures 3A-3D, an example of the operation of the control method according to this invention is proposed below.

Figure 3A shows a hypothetical trend of the temperature $T_D$ of the microcontroller over time, whilst Figure 3B shows a hypothetical trend of the temperature $T_M$ of the MOSFETs over time.

In the example illustrated, at the instant t1 the temperature $T_D$ reaches the respective first threshold temperature $T1_D$, the counter, Figure 3C "timeout", starts the count of the three minutes and the speed of rotation remains at the first value V1 corresponding to the nominal speed.

At the instant t2, after the 3 minutes has passed, both the temperature $T_D$ of the microcontroller and the temperature $T_M$ of the MOSFETs are higher than the respective first threshold temperature $T1_D$, $T1_M$ and the speed V of rotation is changed to the value V2, that is, there is a degrading of the speed V of rotation.

At the instant t3, both the temperature $T_D$ of the microcontroller and the temperature $T_M$ of the MOSFETs are lower than the respective first threshold temperature $T1_D$, $T1_M$, the speed V of rotation is changed to the value V1 and the counter is set to zero.

At the instant t4 the temperature $T_D$ of the microcontroller again exceeds the respective first threshold temperature $T1_D$ and the counter starts again to count the 3 minutes.

At the instant t5, when the 3 minutes have still not passed, the temperature $T_D$ of the microcontroller exceeds the respective second threshold temperature $T2_D$, so the speed is changed to the second value V2 whilst the counter preferably continues the counting.

At the instant t7, when the 3 minutes have still not passed, both the temperatures $T_D$ and $T_M$ have dropped below the respective first threshold temperature $T1_D$, $T1_M$, so the speed is changed to the value V1 and the counter is set to zero.

At the instant t8 the temperature $T_D$ of the microcontroller exceeds the respective first threshold temperature $T1_D$ and the counter starts the count of the X minutes.

At the instant t9, within the time X, the temperature $T_D$ of the microcontroller exceeds the respective second threshold temperature $T2_D$, so the speed V of rotation of the motor is reduced to the second value V2. At the instant t10 the temperature $T_D$ of the microcontroller reaches its maximum threshold temperature $T3_D$, so the electric motor is immediately stopped and the speed V is changed to 0.

At the instant t11 both the temperature $T_D$ of the microcontroller and the temperature $T_M$ of the MOSFETs are below the respective first threshold temperatures $T1_D$ and $T1_M$, so the motor is restarted at the speed V1 and the counter is set to zero.

In the preferred embodiment illustrated, the counter is not managed from t10 to t11 and the counter remains the same until the reset or zeroing at t11.

The invention described brings important advantages.

The counter introduces a delay in the degrading of the performance of the electric ventilator which is particularly advantageous if the temperature increase is temporary.

If the temperatures drop, during the time X, below the respective first threshold temperatures, the speed is not degraded.

The second threshold temperatures $T2_M$ $T2_D$ protect the electric motor and the vehicle if the increase in the temperature is relatively sudden and the time measured by the counter is too long.

The operation of the electric ventilator is in any case guaranteed, although at a speed lower than the nominal speed, to protect the entire vehicle even when the above-mentioned thresholds have been exceeded.

The third threshold temperatures $T3_M$ $T3_D$ ensure the protection of the system by stopping the electric motor if there are excessive over-temperatures.

When one of the temperatures reaches the respective maximum threshold temperature the motor is switched off, since, most likely, the temperature in the motor compartment has reached extremely high values.

The degrading of the speed is constant during predetermined events and is no longer adjusted as a function of the variation in temperature over time.

The electric ventilator continues to work even if the event of temperature increases; even if it is outside the specifications, it operates more than it would with prior art controls.

## Claims

1. A method for controlling an electric ventilator comprising an electric motor and electronics for controlling the electric motor, the control electronics comprising at least one microcontroller and electronic power means to impart a speed V of rotation to the electric motor, the method comprising the steps of

   setting a first value V1 of the speed V of rotation of the electric motor; setting a maximum threshold temperature $T3_M$ of the electronic power means;

   setting a maximum threshold temperature $T3_D$ of the microcontroller; setting a first threshold temperature $T1_D$ of the microcontroller lower than the maximum threshold temperature $T3_D$ of the microcontroller; monitoring a temperature $T_D$ of the microcontroller;

   monitoring a temperature $T_M$ of the electronic power means;

   the method being **characterised in that** it comprises the steps of setting a first threshold temperature $T1_M$ of the electronic power means lower than the maximum threshold temperature $T3_M$ of the electronic power means;

   setting a second value V2 of the speed V of rotation of the electric motor lower than the first value V1; preparing a counter of a predetermined time X;

   activating the counter if the temperature $T_D$ of the microcontroller or the temperature $T_M$ of the electronic power means exceeds the respective first threshold temperature $T1_D$, $T1_M$;

   reducing the speed V of rotation of the electric motor to the second value V2 if after the predetermined time X, the temperature $T_D$ of the microcontroller or the temperature $T_M$ of the electronic power means is higher than the respective first threshold temperature $T_{1D}$, $T1_M$ wherein the speed V of rotation of the electric motor is changed to zero, that is, the electric motor is stopped, if the temperature $T_D$ of the microcontroller or the temperature $T_M$ of the electronic power means exceeds the respective maximum threshold temperature $T3_D$, $T3_M$.

2. The method according to claim 1, wherein the speed V of rotation of the electric motor is returned to the first value V1 if the temperature $T_D$ of the microcontroller and the temperature $T_M$ of the electronic power means each become lower than the respective first threshold temperatures $T_{1D}$, $T1_M$.

**3.** The method according to claim 1 or 2, wherein the speed V of rotation of the electric motor is returned to the first value V1 if the temperature $T_D$ of the microcontroller and the temperature $T_M$ of the electronic power means each become lower than the respective first threshold temperatures $T1_D$, $T1_M$ reduced by a safety factor Y of preferably between 2 and 8 degrees Centigrade.

**4.** The method according to any one of claims 1 to 3, wherein the method comprises the steps of
setting a second threshold temperature $T2_D$ of the microcontroller lower than the maximum threshold temperature $T3_D$ of the microcontroller and higher than the first threshold temperature $T1_D$ of the microcontroller; setting a second threshold temperature $T2_M$ of the electronic power means lower than the maximum threshold temperature $T3_M$ of the electronic power means and higher than the first threshold temperature $T1_M$ of the electronic power means; reducing the speed V of rotation of the motor to the second value V2 if during the predetermined time X, the temperature $T_D$ of the microcontroller or the temperature $T_M$ of the electronic power means exceeds the respective second threshold temperature $T2_D$, $T2_M$.

**5.** The method according to any one of the preceding claims, wherein the counter is reset if the temperature $T_D$ of the microcontroller and the temperature $T_M$ of the electronic power means are each lower than the respective first threshold temperature $T1_D$, $T1_M$.

**6.** The method according to any one of the preceding claims, wherein the counter is reset if the temperature $T_D$ of the microcontroller and the temperature $T_M$ of the electronic power means each become lower than the respective first threshold temperature $T_{1D}$, $T1_M$ reduced by a safety factor X of preferably between 2 and 8 degrees Centigrade.

**7.** The method according to any one of the preceding claims, wherein the second value V2 of the speed of rotation is set as the first speed value V1 reduced by a constant percentage D, that is to say:

$$V2 = V1 - D\%.$$

**8.** The method according to claim 7, wherein the value of the constant percentage D is between 3 and 8, that is to say:

$$3 \leq D \leq 8.$$

**9.** The method according to any one of the preceding claims, wherein the predetermined time X is between 2 minutes and 5 minutes, that is to say:

$$2 \text{ minutes} \leq \lceil X \rfloor \leq 5 \text{ minutes}.$$

**10.** The method according to any one of the preceding claims, wherein the maximum threshold temperature $T3_M$ of the electronic power means is higher than or equal to 160°C and is lower than 165°C, that is to say:

$$160°C \leq T3_M < 165°C.$$

**11.** The method according to any one of the preceding claims, wherein the maximum threshold temperature $T3_D$ of the microcontroller is higher than or equal to 155°C and is lower than 160°C, that is to say:

$$155°C \leq T3_D < 160°C.$$

**12.** The method according to any one of the preceding claims, wherein the first threshold temperature $T1_D$ of the microcontroller is higher than or equal to 145°C and is lower than 150°C, that is to say:

$$145°C \leq T1_D < 150°C.$$

**13.** The method according to any one of the preceding claims, wherein the first threshold temperature $T1_M$ of the electronic power means is higher than or equal to 150°C and is lower than 155°C, that is to say:

$$150°C \leq T1M < 155°C.$$

14. The method according to claim 4, wherein the second threshold temperature $T2_D$ of the microcontroller is higher than or equal to 150°C and is lower than 155°C, that is to say:

$$150°C \leq T2_D < 155°C.$$

15. The method according to claim 4, wherein the second threshold temperature $T2_M$ of the electronic power means is higher than or equal to 155°C and is lower than 160°C, that is to say:

$$155°C \leq T2_M < 160°C.$$

**Patentansprüche**

1. Verfahren zur Steuerung eines elektrischen Lüfters umfassend einen Elektromotor und Elektronik zur Steuerung des Elektromotors, wobei die Steuerelektronik mindestens einen Mikrocontroller und elektronische Leistungsmittel umfasst, um dem Elektromotor eine Drehzahl V zu verleihen, wobei das Verfahren die folgenden Schritte umfasst:

   Einstellen eines ersten Werts V1 der Drehzahl V des Elektromotors;
   Einstellen einer maximalen Schwellentemperatur $T3_M$ der elektronischen Leistungsmittel;
   Einstellen einer maximalen Schwellentemperatur $T3_D$ des Mikrocontrollers;
   Einstellen einer ersten Schwellentemperatur $T1_D$ des Mikrocontrollers, die niedriger als die maximale Schwellentemperatur $T3_D$ des Mikrocontrollers ist;
   Überwachen einer Temperatur $T_D$ des Mikrocontrollers;
   Überwachen einer Temperatur $T_M$ der elektronischen Leistungsmittel;
   wobei das Verfahren **dadurch gekennzeichnet ist, dass** es die folgenden Schritte umfasst:

   Einstellen einer ersten Schwellentemperatur $T1_M$ der elektronischen Leistungsmittel, die niedriger als die maximale Schwellentemperatur $T3_M$ der elektronischen Leistungsmittel ist;
   Einstellen eines zweiten Werts V2 der Drehzahl V des Elektromotors, der niedriger als der erste Wert V1 ist;
   Vorbereiten eines Zählers für eine vorbestimmte Zeit X;
   Aktivieren des Zählers, wenn die Temperatur $T_D$ des Mikrocontrollers oder die Temperatur $T_M$ der elektronischen Leistungsmittel die jeweilige erste Schwellentemperatur $T1_D$, $T1_M$ überschreitet;
   Reduzieren der Drehzahl V des Elektromotors auf den zweiten Wert V2, wenn nach der vorbestimmten Zeit X die Temperatur $T_D$ des Mikrocontrollers oder die Temperatur $T_M$ der elektronischen Leistungsmittel höher als die jeweilige erste Schwellentemperatur $T1_D$, $T1_M$ ist, wobei die Drehzahl V des Elektromotors auf Null geändert wird, das heißt, der Elektromotor wird angehalten, wenn die Temperatur $T_D$ des Mikrocontrollers oder die Temperatur $T_M$ der elektronischen Leistungsmittel die jeweilige maximale Schwellentemperatur $T3_D$, $T3_M$ überschreitet.

2. Verfahren nach Anspruch 1, wobei die Drehzahl V des Elektromotors auf den ersten Wert V1 zurückgestellt wird, wenn die Temperatur $T_D$ des Mikrocontrollers und die Temperatur $T_M$ der elektronischen Leistungsmittel jeweils niedriger als die jeweiligen ersten Schwellentemperaturen $T1_D$, $T1_M$ werden.

3. Verfahren nach Anspruch 1 oder 2, wobei die Drehzahl V des Elektromotors auf den ersten Wert V1 zurückgestellt wird, wenn die Temperatur $T_D$ des Mikrocontrollers und die Temperatur $T_M$ der elektronischen Leistungsmittel jeweils niedriger als die jeweiligen ersten Schwellentemperaturen $T1_D$, $T1_M$ werden, reduziert um einen Sicherheitsfaktor Y von vorzugsweise zwischen 2 und 8 Grad Celsius.

4. Verfahren nach einem der Ansprüche 1 bis 3, wobei das Verfahren die folgenden Schritte umfasst:

   Einstellen einer zweiten Schwellentemperatur $T2_D$ des Mikrocontrollers, die niedriger als die maximale Schwellentemperatur $T3_D$ des Mikrocontrollers und höher als die erste Schwellentemperatur $T1_D$ des Mikrocontrollers ist;

Einstellen einer zweiten Schwellentemperatur $T2_M$ der elektronischen Leistungsmittel, die niedriger als die maximale Schwellentemperatur $T3_M$ der elektronischen Leistungsmittel und höher als die erste Schwellentemperatur $T1_M$ der elektronischen Leistungsmittel ist;

Reduzieren der Drehzahl V des Motors auf den zweiten Wert V2, wenn während der vorbestimmten Zeit X die Temperatur $T_D$ des Mikrocontrollers oder die Temperatur $T_M$ der elektronischen Leistungsmittel die jeweilige zweite Schwellentemperatur $T2_D$, $T2_M$ überschreitet.

5.  Verfahren nach einem der vorhergehenden Ansprüche, wobei der Zähler zurückgestellt wird, wenn die Temperatur $T_D$ des Mikrocontrollers und die Temperatur $T_M$ der elektronischen Leistungsmittel jeweils niedriger als die jeweilige erste Schwellentemperatur $T1_D$, $T1_M$ sind.

6.  Verfahren nach einem der vorhergehenden Ansprüche, wobei der Zähler zurückgestellt wird, wenn die Temperatur $T_D$ des Mikrocontrollers und die Temperatur $T_M$ der elektronischen Leistungsmittel jeweils niedriger als die jeweilige erste Schwellentemperatur $T1_D$, $T1_M$ werden, reduziert um einen Sicherheitsfaktor X von vorzugsweise zwischen 2 und 8 Grad Celsius.

7.  Verfahren nach einem der vorhergehenden Ansprüche, wobei der zweite Wert V2 der Drehzahl als der erste Geschwindigkeitswert V1 gesetzt wird, reduziert um einen konstanten Prozentsatz D, das heißt:

$$V2 = V1 - D\%.$$

8.  Verfahren nach Anspruch 7, wobei der Wert des konstanten Prozentsatzes D zwischen 3 und 8 liegt, das heißt:

$$3 \leq D \leq 8.$$

9.  Verfahren nach einem der vorhergehenden Ansprüche, wobei die vorbestimmte Zeit X zwischen 2 Minuten und 5 Minuten liegt, das heißt:

$$2 \text{ Minuten} \leq X \leq 5 \text{ Minuten}.$$

10. Verfahren nach einem der vorhergehenden Ansprüche, wobei die maximale Schwellentemperatur $T3_M$ der elektronischen Leistungsmittel höher als oder gleich wie 160°C ist und niedriger als 165°C ist, das heißt:

$$160°C \leq T3_M < 165°C.$$

11. Verfahren nach einem der vorhergehenden Ansprüche, wobei die maximale Schwellentemperatur $T3_D$ des Mikrocontrollers höher als oder gleich wie 155°C ist und niedriger als 160°C ist, das heißt:

$$155°C \leq T3_D < 160°C.$$

12. Verfahren nach einem der vorhergehenden Ansprüche, wobei die erste Schwellentemperatur $T1_D$ des Mikrocontrollers höher als oder gleich wie 145°C ist und niedriger als 150°C ist, das heißt:

$$145°C \leq T1_D < 150°C.$$

13. Verfahren nach einem der vorhergehenden Ansprüche, wobei die erste Schwellentemperatur $T1_M$ der elektronischen Leistungsmittel höher als oder gleich wie 150°C ist und niedriger als 155°C ist, das heißt:

$$150°C \leq T1_M < 155°C.$$

**14.** Verfahren nach Anspruch 4, wobei die zweite Schwellentemperatur $T2_D$ des Mikrocontrollers höher als oder gleich wie 150°C ist und niedriger als 155°C ist, das heißt:

$$150°C \leq T2_D < 155°C.$$

**15.** Verfahren nach Anspruch 4, wobei die zweite Schwellentemperatur $T2_M$ der elektronischen Leistungsmittel höher als oder gleich wie 155°C ist und niedriger als 160°C ist, das heißt:

$$155°C \leq T2_M < 160°C.$$

**Revendications**

**1.** Procédé permettant de commander un ventilateur électrique comprenant un moteur électrique et de l'électronique pour commander le moteur électrique, l'électronique de commande comprenant au moins un microcontrôleur et des moyens électroniques de puissance pour conférer une vitesse V de rotation au moteur électrique, le procédé comprenant les étapes suivantes:

fixer une première valeur V1 de la vitesse V de rotation du moteur électrique ;
fixer une température seuil maximum $T3_M$ des moyens électroniques de puissance ;
fixer une température seuil maximum $T3_D$ du microcontrôleur ;
fixer une première température seuil $T1_D$ du microcontrôleur inférieure à la température seuil maximum $T3_D$ du microcontrôleur ;
surveiller une température $T_D$ du microcontrôleur ;
surveiller une température $T_M$ des moyens électroniques de puissance ;
le procédé étant **caractérisé en ce qu'**il comprend les étapes suivantes:

fixer une première température seuil $T1_M$ des moyens électroniques de puissance inférieure à la température seuil maximum $T3_M$ des moyens électroniques de puissance ;
fixer une seconde valeur V2 de la vitesse V de rotation du moteur électrique inférieure à la première valeur V1 ; préparer un compteur d'une durée prédéterminée X ;
activer le compteur si la température $T_D$ du microcontrôleur ou si la température $T_M$ des moyens électroniques de puissance excède la première température seuil respective $T1_D$, $T1_M$ ;
réduire la vitesse V de rotation du moteur électrique sur la seconde valeur V2 si après la durée prédéterminée X, la température $T_D$ du microcontrôleur ou la température $T_M$ des moyens électroniques de puissance est supérieure à la première température seuil respective $T1_D$, $T1_M$, dans lequel la vitesse V de rotation du moteur électrique est modifiée à zéro, c'est-à-dire que le moteur électrique est à l'arrêt, si la température $T_D$ du microcontrôleur ou la température $T_M$ des moyens électroniques de puissance excède la température seuil maximum respective $T3_D$, $T3_M$.

**2.** Procédé selon la revendication 1, dans lequel la vitesse V de rotation du moteur électrique retourne à la première valeur V1 si la température $T_D$ du microcontrôleur et la température $T_M$ des moyens électroniques de puissance deviennent chacune inférieure aux premières températures seuils respectives $T1_D$, $T1_M$.

**3.** Procédé selon la revendication 1 ou 2, dans lequel la vitesse V de rotation du moteur électrique retourne à la première valeur V1 si la température $T_D$ du microcontrôleur et la température $T_M$ des moyens électroniques de puissance deviennent chacune inférieure aux premières températures seuils respectives $T1_D$, $T1_M$, réduites par un coefficient de sécurité Y compris de préférence entre 2 et 8 degrés centigrades.

**4.** Procédé selon l'une quelconque des revendications de 1 à 3, dans lequel le procédé comprend les étapes suivantes:

fixer une seconde température seuil $T2_D$ du microcontrôleur inférieure à la température seuil maximum $T3_D$ du microcontrôleur et supérieure à la première température seuil $T1_D$ du microcontrôleur ;
fixer une seconde température seuil $T2_M$ des moyens électroniques de puissance inférieure à la température seuil maximum $T3_M$ des moyens électroniques de puissance et supérieure à la première température seuil $T1_M$ des moyens électroniques de puissance ;

réduire la vitesse V de rotation du moteur sur la seconde valeur V2 si pendant la durée prédéterminée X, la température $T_D$ du microcontrôleur ou la température $T_M$ des moyens électroniques de puissance excède la seconde température seuil respective $T2_D$, $T2_M$.

5. Procédé selon l'une quelconque des revendications précédentes, dans lequel le compteur est réinitialisé si la température $T_D$ du microcontrôleur et la température $T_M$ des moyens électroniques de puissance deviennent chacune inférieure à la première température seuil respective $T1_D$, $T1_M$.

6. Procédé selon l'une quelconque des revendications précédentes, dans lequel le compteur est réinitialisé si la température $T_D$ du microcontrôleur et la température $T_M$ des moyens électroniques de puissance deviennent chacune inférieure à la première température seuil respective $T1_D$, $T1_M$, réduites par un coefficient de sécurité X compris de préférence entre 2 et 8 degrés centigrades.

7. Procédé selon l'une quelconque des revendications précédentes, dans lequel la seconde valeur V2 de la vitesse de rotation est fixée comme la première valeur de vitesse V1 réduite par un pourcentage constant D, c'est-à-dire :

$$V2 = V1 - D\%.$$

8. Procédé selon la revendication 7, dans lequel la valeur du pourcentage constant D est comprise entre 3 et 8, c'est-à-dire :

$$3 \leq D \leq 8.$$

9. Procédé selon l'une quelconque des revendications précédentes, dans lequel la durée prédéterminée X est comprise entre 2 minutes et 5 minutes, c'est-à-dire :

$$2 \text{ minutes} \leq X \leq 5 \text{ minutes}.$$

10. Procédé selon l'une quelconque des revendications précédentes, dans lequel la température seuil maximum $T3_M$ des moyens électroniques de puissance est supérieure ou égale à 160°C et est inférieure à 165°C, c'est-à-dire :

$$160°C \leq T3_M < 165°C.$$

11. Procédé selon l'une quelconque des revendications précédentes, dans lequel la température seuil maximum $T3_D$ du microcontrôleur est supérieure ou égale à 155°C et est inférieure à 160°C, c'est-à-dire :

$$155°C \leq T3_D < 160°C.$$

12. Procédé selon l'une quelconque des revendications précédentes, dans lequel la première température seuil maximum $T1_D$ du microcontrôleur est supérieure ou égale à 145°C et est inférieure à 150°C, c'est-à-dire :

$$145°C \leq T1_D < 150°C.$$

13. Procédé selon l'une quelconque des revendications précédentes, dans lequel la première température seuil $T1_M$ des moyens électroniques de puissance est supérieure ou égale à 150°C et est inférieure à 155°C, c'est-à-dire :

$$150°C \leq T1_M < 155°C.$$

14. Procédé selon la revendication 4, dans lequel la seconde température seuil $T2_D$ du microcontrôleur est supérieure ou égale à 150°C et est inférieure à 155°C, c'est-à-dire :

$$150°C \ \leq \ T2_D \ < \ 155°C.$$

**15.** Procédé selon la revendication 4, dans lequel la seconde température seuil $T2_M$ des moyens électroniques de puissance est supérieure ou égale à 155°C et est inférieure à 160°C, c'est-à-dire :

$$155°C \ \leq \ T2_M \ < \ 160°C.$$

FIG. 1A

FIG. 1B

EP 3 169 904 B1

# FIG. 2

FIG. 3A

FIG. 3B

FIG. 3C

FIG. 3D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1073174 A
- EP 1383232 A
- DE 19945824 A
- US 2010150736 A